# EUROPÄISCHE PATENTSCHRIFT

(11) **EP 3 037 681 B1**
(45) Veröffentlichungstag und Bekanntmachung des Hinweises auf die Patenterteilung: **03.04.2019**
(21) Anmeldenummer: 15188342.8
(22) Anmeldetag: 05.10.2015
(51) Int. Cl.: F16B 12/06, A47B 88/00

(54) **RAUMTEILUNGSSYSTEM MIT EINER VERBINDUNGSVORRICHTUNG UND EINE ALS HOHLPROFIL AUSGEBILDETE STREBE**
ROOM DIVIDING SYSTEM WITH A CONNECTING DEVICE AND A STRUT IN FORM OF A HOLLOW PROFILE
SYSTEME DE SEPARATION D'ESPACE AVEC UN DISPOSITIF DE LIAISON ET UNE UN PROFILE CREUX

(30) Priorität: 22.12.2014 DE 202014106206 U
(43) Veröffentlichungstag der Anmeldung: 29.06.2016
(73) Patentinhaber: Grass GmbH, 6973 Höchst (AT)
(72) Erfinder: Rihtarec, Filip, 6972 Fußach (AT)
(74) Vertreter: Otten, Roth, Dobler & Partner mbB Patentanwälte

(56) Entgegenhaltungen:
- EP-A1- 1 418 345
- EP-A1- 2 072 380
- DE-A1- 19 647 758
- US-A- 3 851 980

## Beschreibung

Die Erfindung betrifft ein Raumteilungssystem für Möbel mit einer hohlprofilförmigen Strebe und einer Verbindungsvorrichtung sowie ein Möbel.

Auf dem Gebiet des Möbelbaus sind Raumteilungssysteme mit Verbindungsvorrichtungen für eine als Hohlprofil ausgebildete Strebe in verschiedensten Ausführungen z.B. aus der US 3,851,980 oder der DE 196 47 758 A1 bekannt. Dem Stand der Technik entsprechend werden Hohlprofilstreben beispielsweise in einem Möbelteil, insbesondere einer Schublade, als Raumteilungselemente eingesetzt. Die Verbindungsvorrichtung kann dafür beispielsweise einen Einsteckabschnitt aufweisen, der an einen Innenquerschnitt des Hohlprofils angepasst ist und der sich dadurch in eine stirnseitige Öffnung der Strebe einstecken lässt.
Des Weiteren ist bekannt, dass am Einsteckabschnitt ein Vorsprung hervorstehend ausgebildet ist, der für ein Abtragen durch eine Berandungskante der stirnseitigen Öffnung der Strebe vorgesehen ist. Der Einsteckabschnitt der Verbindungsvorrichtung lässt sich bei einer Montage einer Hohlprofilstrebe daher in einem Arbeitsgang anpassen und anbringen.

Der vorliegenden Erfindung liegt die Aufgabe zugrunde, die Verbindungsvorrichtung eines Raumteilungssystems zu verbessern.

Die Aufgabe wird durch ein Raumteilungssystem mit den Merkmalen des Anspruchs 1 gelöst.

Bevorzugte und vorteilhafte Ausführungen der Erfindung sind in den Unteransprüchen angegeben.

Die Erfindung geht von einem Raumteilungssystem für Möbel mit wenigstens einer hohlprofilförmigen Strebe und wenigstens einer Verbindungsvorrichtung aus, mit der die Strebe mit einem Bauteil verbindbar ist. Dabei ist die Verbindungsvorrichtung mit einem Einsteckabschnitt versehen, welcher als ein Querschnittsprofil ausgebildet ist, wobei der Einsteckabschnitt zum Einstecken in eine stirnseitige Öffnung der Strebe an einem Innenquerschnitt des Hohlprofils angepasst ist. Am Einsteckabschnitt ist außerdem ein Vorsprung hervorstehend ausgebildet, der für ein Abtragen durch eine Berandungskante der stirnseitigen Öffnung der Strebe vorgesehen ist. Der Kern der Erfindung besteht darin, dass am Einsteckabschnitt entlang einer Einsteckrichtung eine Vielzahl von Vorsprüngen und Vertiefungen vorhanden ist, die bei einem Einsteckvorgang des Einsteckabschnitts in die Strebe durch die Berandungskante passiert wird, wobei die Vertiefungen zur Aufnahme von abgetragenem Material der Vorsprünge vorgesehen sind. Die Vorsprünge sind an Seitenflächenbereichen des Einsteckabschnitts hervorstehend ausgebildet und ragen über das Querschnittsprofil hinaus. Die Vertiefungen werden beim Einsteckvorgang des Einsteckabschnitts in die Strebe durch die Berandungskante passiert, wobei zumindest einer der Vorsprünge durch die Berandungskante beim Einsteckvorgang vollständig abgetragen wird. Dadurch kann eine Berandungskante bei einem Einstecken überstehendes Material von einem Einsteckabschnitt vollständig abtrennen, wodurch das abgetragene Material aus einem Zwischenraum zwischen der Berandungskante und z.B. einem Anschlag am Verbindungselement insbesondere ohne Rückstände entfernbar ist. Das abgetragene Material ist dabei durch die Vertiefung insbesondere vollständig entfernbar. Durch die Verbindungsvorrichtung des erfindungsgemäßen Raumteilungssystems lässt sich vorteilhaft vermeiden, dass sich z.B. abgeschertes Material vor einer Berandungskante ansammeln und eine Hohlprofilöffnung mit der Berandungskante an der Verbindungsvorrichtung nicht genau positioniert werden kann.

Vorzugsweise ist die Vertiefung erst nach einem Überstreichen eines Teils des Vorsprungs erreichbar. Das vom Vorsprung abgetragene Material, das bei entsprechender Festigkeit und Zähigkeit weiterhin mit dem Vorsprung verbunden sein kann, kann dadurch von der Berandungskante erreichbar bleiben und im weiteren Verlauf einer Einsteckbewegung von der Berandungskante in die Vertiefung geschoben werden.

Die Vertiefung kann beispielsweise erst nach einem Überstreichen eines Großteils des Vorsprungs erreichbar sein, damit sich abgeschertes Material in einer Menge ansammeln kann, die sich durch die Berandungskante vorzugsweise vollständig vom Vorsprung abtrennen lässt.

Um unerwünschte Verformungen durch ein Abtragen des Vorsprungs zu vermeiden, ist der Vorsprung vorzugsweise über weniger als eine gesamte Breite des Einsteckabschnitts erstreckt. Damit lässt sich auch ein Fassungsvermögen der Vertiefung für abgetragenes vorteilhaft begrenzt halten. Die Breite ist insbesondere rechtwinklig zu einer Einsteckbewegungsrichtung angeordnet.

Ein Anbringen der Verbindungsvorrichtung an einer Öffnung eines Hohlprofils lässt sich dadurch erleichtern, dass der Vorsprung eine Anlauframpe aufweist, die entlang einer Einsteckrichtung von einer Oberfläche des Einsteckabschnitts bis zu einer Höhe des Vorsprungs insbesondere gleichmäßig ansteigend ausgebildet ist.

Außerdem ist bevorzugt, dass die Vertiefung bis an einem Endanschlag reicht, der den Einsteckabschnitt der Verbindungsvorrichtung begrenzt. Damit lässt sich vermeiden, dass sich abgetrenntes Material in einer Eckfuge ansammelt und in einem Bereich mit dem Einsteckbereich verbunden bleiben kann, der insbesondere unmittelbar an den Endanschlag angrenzt.

Am Einsteckabschnitt entlang einer Einsteckrichtung ist eine Vielzahl von Vorsprüngen und von Vertiefungen zur Aufnahme von beim Einstecken abgetragene Material der Vorsprünge ausgebildet sind. Dadurch lassen sich Verbindungskräfte vorteilhaft auf einen größeren Flächenbereich einer Oberfläche des Einsteckbereichs verteilt aufbringen. Außerdem lässt sich vorteilhaft erreichen, dass Stücke von abgetragenem Material nur bis zu einer begrenzten Größe bei einem Einstecken entstehen kann und sich vergleichsweise zuverlässig in vorgesehene Vertiefungen einlagern lässt, um eine Positionierung einer Öffnung mit der Berandungskante nicht zu behindern.

Vorzugsweise sind die Vorsprünge an entgegengesetzten Oberflächenbereichen des Einsteckabschnitts ausgebildet. Dadurch kann eine stärkere Abtragung auf einer Seite des Einsteckabschnitts durch eine entsprechend schwächere Abtragung auf einer entgegengesetzten Seite ausgeglichen sein.

Die Vorsprünge können beispielsweise entlang eines streifenförmigen Oberflächenbereichs seitlich zueinander versetzt angeordnet sein.

Mit einem erfindungsgemäßen Raumteilungssystem kann, zum Beispiel, ein Möbel, insbesondere eine Schublade mit einer stabilen genau angebrachten Raumteilung versehen werden.

Nachfolgend wird die Erfindung an einem Ausführungsbeispiel näher erläutert und mit Hilfe der Zeichnung beschrieben. Die Ausführungsbeispiele sind in der Figur schematisch und nicht maßstäblich dargestellt.

Es zeigt:

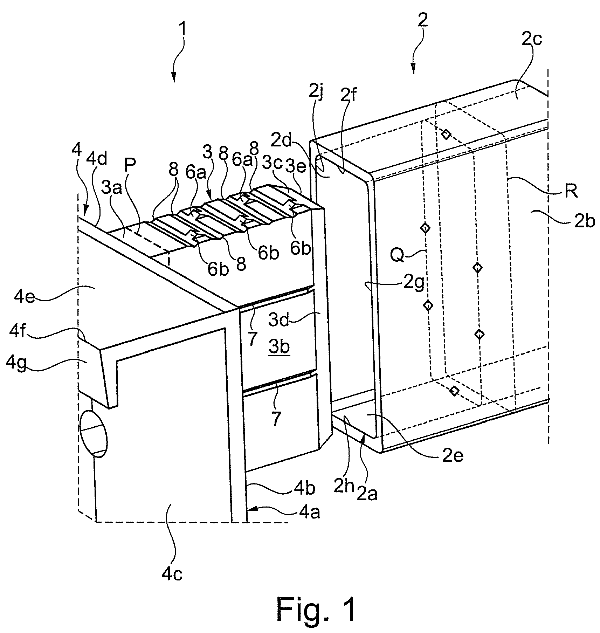

- Figur 1: eine perspektivische Ansicht eines erfindungsgemäßen Raumteilungssystem mit einer Verbindungsvorrichtung.

Ein erfindungsgemäßes Raumteilungssystem mit einer Verbindungsvorrichtung 1 ist in Figur 1 gezeigt. Dabei ist die Verbindungsvorrichtung 1 in Fig.1 vor einer stirnseitigen Öffnung 2a einer Hohlprofilstrebe 2 angeordnet, in die sich ein Einsteckabschnitt 3 der Verbindungsvorrichtung 1 einstecken lässt.

Die Hohlprofilstrebe 2 weist beispielsweise ein rechteckiges äußeres Querschnittprofil R und ein rechteckiges inneres Querschnittprofil Q auf, wodurch der Hohlraum innerhalb der Hohlprofilstrebe 2 von seitlichen Wandabschnitten 2b, 2c, 2d und 2e mit gleichmäßiger Materialdicke umgeben ist. Die Hohlprofilstrebe kann ein Bestandteil eines z.B. Raumteilungssystems für insbesondere eine Schublade (nicht gezeigt), aber auch für weitere Stauräume in einem Möbel (nicht gezeigt) wie z.B. ein Schrankfach sein. Dabei kann die Hohlprofilstrebe insbesondere zur Anbringung von Raumteilungselementen (nicht gezeigt) wie z.B. einer Platte und z.B. einem Gitter vorgesehen sein.

Die in Fig. 1 gezeigte Verbindungsvorrichtung 1 ist für eine Anbringung der Hohlprofilstrebe an einem Wandelement (nicht gezeigt) einer z.B. Schublade (nicht gezeigt) vorgesehen. Daher weist ein Grundkörper 4 der Verbindungsvorrichtung 1 einen z.B. plattenförmigen Anlageabschnitt 4a auf, an dem der Einsteckabschnitt 3 von einer Hauptseitenfläche 4b zentral und z.B. rechtwinklig hervorragend ausgebildet ist. Eine der ersten Hauptseitenfläche 4b am Anlageabschnitt 4a entgegengesetzte Hauptseitenfläche 4c ist zum Anliegen an z.B. einem Schubladenwandelement (nicht gezeigt) vorgesehen.

An einer Oberkante 4d des Anlageabschnitts 4a ist ein flacher, streifenförmiger Stegabschnitt 4e rechtwinklig von der Hauptseitenfläche 4c abstehend mit dem Anlageabschnitt 4a verbunden. An einer dem Anlageabschnitt 4a gegenüberliegenden Kante 4f des Stegabschnitts 4e ist ein weiterer rechtwinklig abstehender Stegabschnitt 4g ausgebildet. Die Stegabschnitte 4e und 4g bilden zusammen mit dem Anlageabschnitt 4a einen Haken, mit dem sich die Verbindungsvorrichtung 1 an einer Oberkante eines Wandelements (nicht gezeigt) einhängen lässt. Vorzugsweise ist der Einsteckabschnitt 3 derart ausgebildet, dass bei einem Einstecken des Einsteckabschnitts 3 die Hohlprofilstrebe 2 am Anlageabschnitt 4a anschlagen kann, wodurch die Hohlprofilstrebe 2 in einer entsprechenden Anbringposition zusätzlich abgestützt und stabilisiert ist.

Der Einsteckabschnitt 3, der mit dem Grundkörper 4 einstückig und insbesondere aus einem durchgehend zusammenhängenden Material bestehend ausgebildet sein kann, ist überwiegend mit einem rechteckigen Querschnittsprofil P ausgebildet. Das Querschnittsprofil P ist vorzugsweise an das innere Querschnittsprofil Q der Hohlprofilstrebe 2 derart angepasst, dass die Querschnittsprofile P und Q entweder deckungsgleich sind oder dass sich das Querschnittsprofil P vollständig innerhalb des Querschnittsprofils Q, d.h. ohne einen überstehenden Abschnitt, anordnen lässt. Dabei weicht das Querschnittsprofil P vorzugsweise wenig vom Querschnittsprofil Q ab, wobei eine Profilabweichung z.B. in der Größenordnung der Materialstärke eines der Wandabschnitte 2b - 2e der Hohlprofilstrebe 2 liegen kann.

Am Einsteckabschnitt 3 sind dabei mehrere verschiedene Vorsprünge 6a, 6b und 7 an Seitenflächenbereichen, z.B. 3a und 3b, hervorstehend ausgebildet, die über das Querschnittsprofil P hinausragen. Dabei sind die Vorsprünge 6a, 6b und 7 derart hervorstehend ausgebildet, dass mindestens einer der Vorsprünge 6a, 6b und 7 über das innere Querschnittsprofils Q der Hohlprofilstrebe 2 hinausragt, insbesondere wenn die Vorsprünge 6a, 6b und 7 an jeweils zwei entgegengesetzten Seitenflächenbereichen, die die Seitenflächenbereiche 3a bzw. 3b einschließen, bereitgestellt sind. Die Vorsprünge 6a, 6b und 7 sind dazu vorgesehen, dass zumindest einer der Vorsprünge 6a, 6b, 7 bei einem Einstecken des Einsteckabschnitts 3 in die stirnseitige Öffnung 2a der Hohlprofilstrebe 2 von wenigstens einer Berandungskante 2f, 2g, 2h bzw. 2j insbesondere teilweise abgetragen wird. Dadurch kann sich der Einsteckabschnitt 3 beim Einstecken selbsttätig an das innere Querschnittsprofil Q der Hohlprofilstrebe anpassen, wodurch ein passgenauer Sitz des Einsteckabschnitts 3 in der Hohlprofilstrebe 2 ohne Bewegungsspiel vorteilhaft erreichbar ist.

Um ein Einstecken des Einsteckabschnitts 3 in die Öffnung 2a der Hohlprofilstrebe 2 zu erleichtern, sind zwischen den Seitenflächenbereichen, z.B. 3a und 3b, und einer Stirnfläche 3e des Einsteckabschnitts Fasen 3c und 3d geformt, mit denen der Einsteckabschnitt 3 zu dessen freistehendem Ende an der Stirnseite 3e hin verjüngt. Außerdem steigen auch die Vorsprünge 6a, 6b und 7 in einer Richtung von der Stirnfläche 3e zum Anlageabschnitt hin an. Dadurch lassen sich die Berandungskanten 2f, 2g, 2h bzw. 2j an der Öffnung 2a der Hohlprofilstrebe 2 nach außen drücken, bis die Berandungskanten 2f, 2g, 2h bzw. 2j aufgrund der Festigkeit der Hohlprofilstrebe 2, die vorzugsweise aus einem härteren Material als die Verbindungsvorrichtung 1 und insbesondere als der Einsteckabschnitt 3 hergestellt ist, ein oder mehrere Vorsprünge 6a, 6b, 7 zumindest teilweise abgetragen werden. Damit lassen sich vergleichsweise hohe Kräfte erreichen, mit denen die Vorsprünge 6a, 6b, 7 nach einem Einstecken gegen die Wandabschnitte 2b - 2e gedrückt werden und durch eine entsprechend erhöhte Haftreibung eine festsitzende Anbringung der Hohlprofilstrebe 2 an der Verbindungsvorrichtung 1 ermöglichen.

Um am oberen Seitenflächenabschnitt 3a zu vermeiden, dass von den Vorsprüngen 6a und 6b abgetragenes Material (nicht gezeigt) die Hohlprofilstrebe 2 daran hindert, am Anlageabschnitt 4a anzuschlagen, sind zwischen dem Anlageabschnitt 4a und jedem der Vorsprünge 6a und 6b mindestens eine Vertiefung 8 ausgebildet, die in Form einer z.B. V-förmigen Rille ausgebildet sein kann. Dabei ist jede der Vertiefungen 8 an zumindest einen der Vorsprünge 6a und 6b derart angrenzend angeordnet, dass bei einem Einstecken des Einsteckabschnitts 3 abgetragenes Material des jeweiligen Vorsprungs 6a, 6b in der entsprechenden Vertiefung 8 aufgenommen werden kann, um zu vermeiden, dass z.B. die Begrenzungskante 2f abgetragenes Material (nicht gezeigt) bis zu einem Anschlag, z.B. dem Anlageabschnitt 4a weitertransportieren kann.

An den seitlich angeordneten Vorsprüngen 7 sind entsprechende Vertiefungen nicht erforderlich, weil von der Berandungskante 2g abgetragenes Material ungehindert nach unten fallen kann.

Durch eine am oberen Seitenflächenbereich 3a verteilte Anordnung von mehreren getrennten Vorsprüngen 6a und 6b ist eine gleichmäßige Kraftverteilung erreichbar, wobei sich mit jedem beim Einstecken der Hohlprofilstrebe 2 abgetragenen Vorsprung 6a bzw. 6b gegebenenfalls eine zusätzliche Verformung an der Hohlprofilstrebe 2 bewirken lässt.

### Bezugszeichenliste:

- 1: Verbindungsvorrichtung
- 2: Hohlprofilstrebe
- 2a: Öffnung
- 2b: Wandabschnitt
- 2c: Wandabschnitt
- 2d: Wandabschnitt
- 2e: Wandabschnitt
- 2f: Berandungskante
- 2g: Berandungskante
- 2h: Berandungskante
- 2j: Berandungskante
- 3: Einsteckabschnitt
- 3a: Seitenflächenbereich
- 3b: Seitenflächenbereich
- 3c: Fase
- 3d: Fase
- 3e: Stirnseite
- 4: Grundkörper
- 4a: Anlageabschnitt
- 4b: Hauptseitenfläche
- 4c: Hauptseitenfläche
- 4d: Oberkante
- 4e: Stegabschnitt
- 4f: Kante
- 4g: Stegabschnitt
- 6a: Vorsprung
- 6b: Vorsprung
- 7: Vorsprung
- 8: Vertiefung

## Patentansprüche

1. Raumteilungssystem für Möbel mit wenigstens einer hohlprofilförmigen Strebe (2) und wenigstens einer Verbindungsvorrichtung (1) mit der die Strebe (2) mit einem Bauteil verbindbar ist, wobei die Verbindungsvorrichtung (1) einen Einsteckabschnitt (3) umfasst, welcher als ein Querschnittsprofil P ausgebildet ist, wobei der Einsteckabschnitt (1) zum Einstecken in eine stirnseitige Öffnung (2a) der Strebe (2) an einen Innenquerschnitt Q des Hohlprofils der Strebe (2) angepasst ist, und wobei am Einsteckabschnitt (3) ein Vorsprung (6a, 6b, 7) hervorstehend ausgebildet ist, der für ein Abtragen durch eine Berandungskante (2f, 2g, 2h, 2j) der stirnseitigen Öffnung (2a) der Strebe (2) vorgesehen ist,
wobei am Einsteckabschnitt (3) entlang einer Einsteckrichtung eine Vielzahl von Vorsprüngen (6a, 6b, 7) und von Vertiefungen (8) zur Aufnahme von beim Einstecken abgetragenem Material der Vorsprünge (6a, 6b, 7) ausgebildet sind, wobei die Vorsprünge (6a, 6b, 7) an Seitenflächenbereichen des Einsteckabschnitts (3) hervorstehend ausgebildet sind und über das Querschnittsprofil P hinausragen,
wobei die Vertiefungen (8) bei einem Einsteckvorgang des Einsteckabschnitts (3) in die Strebe (2) durch die Berandungskante (2f, 2g, 2h, 2j) passiert werden, **dadurch gekennzeichnet, dass** zumindest einer der Vorsprünge (6a, 6b, 7) durch die Berandungskante (2f, 2g, 2h, 2j) beim Einsteckvorgang vollständig abgetragen wird.

2. Raumteilungssystem für Möbel nach Anspruch 1, **dadurch gekennzeichnet, dass** die Vertiefung (8) erst nach einem Überstreichen eines Teils des Vorsprungs (6a, 6b, 7) erreichbar ist.

3. Raumteilungssystem für Möbel nach einem der vorgenannten Ansprüche, **dadurch gekennzeichnet, dass** die Vertiefung (8 ) erst nach einem Überstreichen eines Großteils des Vorsprungs (6a, 6b, 7) erreichbar ist.

4. Raumteilungssystem für Möbel nach einem der vorgenannten Ansprüche, **dadurch gekennzeichnet, dass** der Vorsprung (6a, 6b, 7) über weniger als eine gesamte Breite des Einsteckabschnitts (3) erstreckt ist.

5. Raumteilungssystem für Möbel nach einem der vorgenannten Ansprüche, **dadurch gekennzeichnet, dass** der Vorsprung (6a, 6b, 7) eine Anlauframpe aufweist, die entlang der Einsteckrichtung von einer Oberfläche des Einsteckabschnitts (3) bis zu einer Höhe des Vorsprungs (6a, 6b, 7) gleichmäßig ansteigend ausgebildet ist.

6. Raumteilungssystem für Möbel nach einem der vorgenannten Ansprüche, **dadurch gekennzeichnet, dass** die Vertiefung (8 ) bis an einen Endanschlag (4a) reicht, der den Einsteckabschnitt (3) der Verbindungsvorrichtung (1) begrenzt.

7. Raumteilungssystem für Möbel nach einem der vorgenannten Ansprüche, **dadurch gekennzeichnet, dass** die Vorsprünge (6a, 6b, 7) an entgegengesetzten Oberflächenbereichen (3a, 3b) des Einsteckabschnitts (3) ausgebildet sind.

8. Raumteilungssystem für Möbel nach einem der vorgenannten Ansprüche, **dadurch gekennzeichnet, dass** die Vorsprünge (6a, 6b, 7) entlang eines streifenförmigen Oberflächenbereichs (3a, 3b) seitlich zueinander versetzt angeordnet sind.

9. Möbel mit einem Raumteilungssystem nach einem der vorangegangenen Ansprüche.

## Claims

1. Room dividing system (1) for furniture with at least one hollow profile strut (2) and at least one connecting device (1) with which the strut (2) can be connected to a component, wherein the connecting device (1) comprises an insertion section (3) which is designed as a cross-sectional profile P, wherein the insertion section (1) for inserting into an end face opening (2a) of the strut (2) is adjusted to an inner cross-section Q of the hollow profile of the strut (2), and wherein on the insertion section (3) a projection (6a, 6b, 7) is designed to protrude, which is provided to be removed by an edge (2f, 2g, 2h, 2j) of the end face opening (2a) of the strut (2), wherein on the insertion section (3) along an insertion direction a plurality of projections (6a, 6b, 7) and depressions (8) are formed for receiving material of the projections (6a, 6b, 7) which has been removed during the insertion, wherein the projections (6a, 6b, 7) are designed to protrude on side surface areas of the insertion section (3) and project over the cross-sectional profile P, wherein the depressions (8) are passed by the edge (2f, 2g, 2h, 2j) when the insertion section (3) is inserted into the strut (2), **characterised in that** at least one of the projections (6a, 6b, 7) is fully removed by the edge (2f, 2g, 2h, 2j) during the insertion process.

2. Room dividing system (1) for furniture according to claim 1, **characterised in that** the depression (8) can only be reached after brushing over a part of the projection (6a, 6b, 7).

3. Room dividing system for furniture according to any of the preceding claims, **characterised in that** the depression (8) can only be reached after brushing over a large proportion of the projection (6a, 6b, 7).

4. Room dividing system for furniture according to any of the preceding claims, **characterised in that** the projection (6a, 6b, 7) extends over less than the whole width of the insertion section (3).

5. Room dividing system (1) for furniture according to any of the preceding claims, **characterised in that** the projection (6a, 6b, 7) has a run-on ramp, which is designed to rise evenly along the insertion direction from a surface of the insertion section (3) up to a height of the projection (6a, 6b, 7).

6. Room dividing system for furniture according to any of the preceding claims, **characterised in that** the depression (8) extends up to an end stop (4a) which delimits the insertion section (3) of the connecting device (1).

7. Room dividing system for furniture according to any of the preceding claims, **characterised in that** the projections (6a, 6b, 7) are formed on opposite surface areas (3a, 3b) of the insertion section (3).

8. Room dividing system for furniture according to any of the preceding claims, **characterised in that** the projections (6a, 6b, 7) are arranged along a strip-like surface area (3a, 3b) offset laterally relative to one another.

9. Furniture with a room dividing system according to any of the preceding claims.

## Revendications

1. Système de séparation d'espace pour meubles avec au moins un montant (2) en forme de profilé creux et au moins un dispositif de liaison (1) au moyen duquel le montant (2) peut être relié à un composant, le dispositif de liaison (1) comprenant une section d'insertion (3) qui est conçue comme un profil en section transversale (P), la section d'insertion (3) étant adaptée à une section transversale interne (Q) du profilé creux du montant (2) pour s'insérer dans une ouverture frontale (2a) du montant (2), et une saillie (6a, 6b, 7) étant formée en dépassant sur la section d'insertion (3), laquelle saillie est prévue pour être enlevée par une arête de bord (2f, 2g, 2h, 2j) de l'ouverture frontale (2a) du montant (2), une pluralité de saillie (6a, 6b, 7) et d'évidements (8) pour recevoir le matériau des saillies (6a, 6b, 7) qui est enlevé lors de l'insertion étant formés sur la section d'insertion (3), le long d'une direction d'insertion, les saillies (6a, 6b, 7) étant formées en dépassant dans des zones de surfaces latérales de la section d'insertion (3) et dépassant du profil de section transversale (P), les évidements (8) étant passés à travers les arêtes de bord (2f, 2g, 2h, 2j) lors de l'insertion de la section d'insertion (3) dans le montant (2), **caractérisé en ce que** au moins une des saillies (6a, 6b, 7) est enlevée entièrement par l'arête de bord (2f, 2g, 2h, 2j) lors de l'insertion.

2. Système de séparation d'espace pour meuble selon la revendication 1, **caractérisé en ce que** l'évidement (8) ne peut être atteint qu'après qu'une partie de la saillie (6a, 6b, 7) a été passée.

3. Système de séparation d'espace pour meuble selon l'une des revendications précédentes, **caractérisé en ce que** l'évidement (8) ne peut être atteint qu'après qu'une grande partie de la saillie (6a, 6b, 7) a été passée.

4. Système de séparation d'espace pour meuble selon l'une des revendications précédentes, **caractérisé en ce que** la saillie (6a, 6b, 7) s'étend sur moins qu'une largeur totale de la partie d'insertion (3).

5. Système de séparation d'espace pour meuble selon l'une des revendications précédentes, **caractérisé en ce que** la saillie (6a, 6b, 7) présente une rampe d'attaque qui est formée de façon à monter uniformément le long de la direction d'insertion depuis une surface de la partie d'insertion (3) jusqu'à une hauteur de la saillie (6a, 6b, 7).

6. Système de séparation d'espace pour meuble selon l'une des revendications précédentes, **caractérisé en ce que** l'évidement (8) s'étend jusqu'à une butée de fin (4a) qui délimite la partie d'insertion (3) du dispositif de liaison (1).

7. Système de séparation d'espace pour meuble selon l'une des revendications précédentes, **caractérisé en ce que** les saillies (6a, 6b, 7) sont formées sur des zones de surface opposées (3a, 3b) de la section d'insertion (3).

8. Système de séparation d'espace pour meuble selon l'une des revendications précédentes, **caractérisé en ce que** les saillies (6a, 6b, 7) sont disposées le long d'une zone de surface (3a, 3b) en forme de bande, en étant décalées latéralement les unes par rapport aux autres.

9. Meubles avec un système de séparation d'espace de meuble selon l'une des revendications précédentes.
